# EUROPÄISCHE PATENTSCHRIFT

(11) **EP 0 438 728 B1**
(45) Veröffentlichungstag und Bekanntmachung des Hinweises auf die Patenterteilung: **04.05.1994**
(21) Anmeldenummer: 90124537.3
(22) Anmeldetag: 18.12.1990
(51) Int. Cl.: B01J 3/02, B01J 8/00

(54) **Schleuse zum Ein- und/oder Austragen von Schüttgütern**
Sluice for charging and/or discharging bulk material
Ecluse pour l'introduction et/ou la décharge de produits particulaires

(30) Priorität: 22.12.1989 CH 4588/89
(43) Veröffentlichungstag der Anmeldung: 31.07.1991
(73) Patentinhaber: List AG, CH-4133 Pratteln 2 (CH)
(72) Erfinder: Kunz, Alfred, CH-4108 Witterswil (CH); Schwenk, Walther, Dr., CH-4303 Kaiseraugust (CH); List, Jörg, CH-4133 Pratteln (CH)
(74) Vertreter: Weiss, Peter, Dr. rer.nat.

(56) Entgegenhaltungen:
- BE-A- 889 258
- DE-A- 3 215 817
- DE-C- 843 090
- FR-A- 1 562 213

## Beschreibung

Die Erfindung betrifft eine Schleuse zum Ein- und/oder Austragen von insbesondere schwerfließenden Schüttgütern in oder aus einem unter Druck oder Vakuum stehenden Raum durch eine Austragsöffnung eines Austragsgehäuses, wobei ein Gehäuse mit einem Einlaufstutzen an den Raum anschließt und in dem Gehäuse ein Kolben geführt ist, welcher das Schüttgut von dem Einlaufstutzen zu einem Austragsgehäuse transportiert, und wobei eine Öffnung zwischen Gehäuse und Austragsgehäuse durch ein öffenbares Ventil verschlossen ist.

Der Austrag von Schüttgütern, welche in unter Druck oder Vakuum stehenden Räumen bearbeitet, z. B. gemischt oder geknetet werden, geschieht beispielsweise durch sog. Zellenradschleusen. Bei diesen Zellenradschleusen sind Sektorentaschen ausgebildet, in die das Schüttgut infolge seiner Schwerkraft fällt. Sobald eine Tasche gefüllt ist, wird das Zellenrad weitergedreht, so dass die nächste Tasche gefüllt werden kann, während sich eine bereits gefüllte Tasche entleert.

Probleme bieten diese Vakuumzellenräder vor allem deshalb, weil sich die Taschen zum einen nicht vollständig entleeren. Zum anderen muss durch das Zellenrad der im Arbeitsraum herrschende Druck bzw. das Vakuum abgedichtet werden, was nur unzureichend gelingt. Zum dritten wird ein dem Zellenrad entsprechendes Gasvolumen in den Apparat miteingeschleust.

Weiterhin ist eine Anordnung bekannt, bei der an den Arbeitsraum ein Zwischenbehälter anschliesst, welcher zum einen gegenüber dem Raum mittels eines Ventils und zum anderen gegenüber dem eigentlichen Austrag mittels eines weiteren Ventils abgeschlossen ist. Auch hier liegt vor allem das Problem darin, dass das Produkt durch die Ventile und den Zwischenbehälter nur infolge seiner eigenen Schwerkraft gelangt. Ferner müssen die Ventile innerhalb des Produktstromes gegen das Vakuum bzw. den Druck abdichten. Zwar sind hierzu Spezialschieber entwickelt worden, die jedoch aufwendig sind und bezüglich der Dichtigkeit zu wünschen übrig lassen. Im weiteren muss der Zwischenbehälter vor Öffnen der entsprechenden Schieber evakuiert bzw. belüftet werden, um den unter Druck bzw. Vakuum stehenden Raum nicht zu beeinflussen. Dies erfordert Totzeiten und verteuert das Verfahren.

Ein Austrag, der o.g. Schüttgüter ist auch mittels einer Schnecke möglich, jedoch sind hier die Probleme bezüglich der Dichthaltung noch grösser.

Aus der DE-C 843 090 ist ein Verfahren zum Beschicken von Behältern, die unter höherem Druck stehen, bekannt, wobei das Gut aus einem gegen den Behälter abschließbaren Zylinder in den Behälter derart übertritt, daß auch aus dem Behälter in den Zylinder gelangendes Gas in den Behälter zurückgeführt wird. Hierbei gelangt über eine Zustellvorrichtung Material aus einem Bunker in ein Rohr, in welchem ein Kolben gegen ein Ventil geführt ist.

Aus der DE-A 32 15 817 ist eine Pumpvorrichtung zur Förderung von fließfähigem Gut bekannt, bei der ein Leitzylinder in einen Fülltrichter geschoben wird und in dem Leitzylinder ein Kolben geführt ist, der das fließfähige Gut wieder aus dem Leitzylinder herausstößt. Eine ähnliche Vorrichtung wird auch in der FR-A 1 562 213 gezeigt.

Der Erfinder hat sich zum Ziel gesetzt, eine Schleuse der o.g. Art zu entwickeln, welche keinen Einfluss auf den Druck bzw. das Vakuum im Arbeitsraum hat, welche das Produkt schonend austrägt, einfach aufgebaut ist und verschleissarm arbeitet.

Zur Lösung dieser Aufgabe führt, daß beidseits des Einlaufstutzens Dichtanordnungen vorgesehen sind.

Im vorliegenden Fall wird somit eine Kolbenschleuse verwendet, die sich hervorragend gerade für den Austrag von schwerfliessenden, haftenden Schüttgütern aus einem unter Druck oder Vakuum stehenden Raum als geeignet erwiesen hat. Gerade wenn das Produkt selbst hochgiftig ist, d.h., wenn insbesondere die in dem Arbeitsraum herrschenden Dämpfe nicht nach aussen gelangen sollen, ist die vorliegende Kolbenschleuse einsetzbar. Sie arbeitet, ohne dass der Raum in irgendeiner Weise belüftet oder evakuiert werden muss.

Bevorzugt verläuft die Längsachse des Gehäuses schräg oder senkrecht zur Fallrichtung des Schüttgutes beim Einlauf in das Gehäuse und beim Auslauf aus dem Austragsgehäuse. Auf diese Weise wird gewährleistet, dass das Produkt aufgrund seiner eigenen Schwerkraft vor die Stirnfläche des Kolbens gelangt und dort den Raum weitestgehend auffüllt. Giftige Dämpfe od. dgl. werden hierdurch nur in äusserst geringem Umfange mit ausgetragen.

Der Kolben schiebt das Produkt vom Einlaufstutzen zum Austragsgehäuse, so dass eine positive Produktförderung stattfindet, die nicht alleine von der Schwerkraft abhängt.

Während des Transportes des Schüttgutes findet keine Scherung statt, so dass von einer schonenden Behandlung des Schüttgutes gesprochen werden kann. Am Austragsgehäuse selbst wird das Schüttgut gänzlich aus dem Gehäuse durch den Kolben ausgeschoben, so dass keinerlei Reste mehr an den Dichtflächen liegen bleiben. Aus diesem Grunde findet auch ein sicheres Schliessen des Ventils wieder statt, da das Ventil nicht gegen einen Produktstrom schliessen muss und kein Produkt zwischen den Dichtflächen des Ventils eingeklemmt wird.

Höchste Beachtung ist im vorliegenden Fall der Dichtung des Kolbens zu widmen. Von der Dichtung hängt auch die geringe Be- bzw. Entlüftung des Arbeitsraumes während des Ausstossvorganges ab. In einem Ausführungsbeispiel der Erfindung besteht die Dichtanordnung aus einem Gleitring mit anschliessender Dichtlippe und nachfolgenden Abstreifern. Diese Anordnung ist noch relativ kompliziert und einem höheren Verschleiss ausgesetzt. Deshalb hat der Erfinder eine wesentlich bessere Dichtung entwickelt, welche aus einem Gleitring in einem Lagergehäuse besteht, dem zumindest ein Dichtring, insbesondere ein Teflonring nachfolgt. Dieser Dichtring weist einen Einschnitt auf, in welchen ein Druckring eingesetzt ist. Als Druckring hat sich insbesondere ein Viton-Ring als wirkungsvoll erwiesen. Dieser Druckring hat die Aufgabe, bei einem möglichen Abrieb des Teflonringes die Dichtkante zum Kolben hin nachzuführen.

Des weiteren wird der Dichtring mit einer abgeschrägten Dichtkante versehen, die sich dem Kolben anpasst und ihn flächig abdichtet.

In der Praxis hat sich herausgestellt, dass mit dieser erfindungsgemässen Dichtung Leckagen weitgehendst vermieden werden. Dennoch liegt die Dichtung dem Kolben nicht so eng an, dass eine zusätzliche Wärme, die in der Regel unerwünscht ist, erzeugt wird.

Auch für das Ventil zwischen Austragsgehäuse und Kolbengehäuse hat sich der Erfinder etwas einfallen lassen. Hier wird die meist zylindrische Öffnung des Kolbengehäuses mit einem Schliessteller verschlossen, welcher in die Öffnung des Kolbengehäuses in Schliesslage eingreift und mit einer abgeschrägten Umfangskante seinen Ventilsitz einnimmt. So liegt der Schliessteller der Stirnfläche des Kolbens gegenüber, wobei beide in parallelen Ebenen angeordnet sind. Die Abdichtung erfolgt bevorzugt metallisch.

Der Schliessteller wird ferner über eine Federung in Schliesslage gehalten, welche ggfs. Passungenauigkeiten ausgleichen kann. Die Bewegung des Schliesstellers erfolgt über eine entsprechende hydraulische oder pneumatische Zylinder-Einheit mit ausfahrender Kolbenstange.

Bevorzugt wird die Vorrichtung für Vakuum eingesetzt. In der ersten Endlage befindet sich die Stirnfläche des Kolbens so weit zurückgezogen, dass über den Einlaufstutzen Schüttgut in den Raum vor der Stirnfläche des Kolbens gelangen kann. Dieses Schüttgut wird mit dem Kolben etwa waagrecht zum Austragsgehäuse hingeschoben, wobei zuerst die lichte Weite des Einlaufstutzens und sodann eine darauf folgende Dichtanordnung oben beschriebener Art überfahren wird.

Nach dem Überfahren dieser Dichtanordnung erfolgt ein Abheben des Schliesstellers von der Öffnung des Gehäuses, so dass Schüttgut aus dem Gehäuse ausgestossen und durch die entspechende Austragsöffnung fallen kann.

Der Kolben wird soweit nach vorne bewegt, bis die Ebene seiner Stirnfläche in etwa in der Ebene der Öffnung des Gehäuses liegt. Hierdurch wird gewährleistet, daß keinerlei Schüttgut mehr im Gehäuse selbst verbleibt, was das dichte Schliessen des Ventils im nachfolgenden Schritt behindern könnte.

Nunmehr erfolgt ein Zurückfahren des Kolbens um ein kurzes Stück, so dass genügend Platz freigegeben wird, der dem Schliessteller ein dichtes Schliessen ermöglicht. Wenn in diesem Augenblick der Schliessteller seinen Sitz einnimmt, ist zwischen Stirnfläche des Kolbens und Schliessteller nur ein sehr geringer mit Fremdluft gefüllter Raum gegeben, deren Volumen keinerlei Auswirkung auf den Arbeitsraum hat. Wenn jetzt der Kolben zurückgefahren wird, so entsteht bereits in dem Raum zwischen Schliessteller und Kolben ein Vakuum, welches gewährleistet, dass nach Überfahren der entsprechenden Dichtung und des Einlaufstutzens so gut wie kein Fremdgas in den Arbeitsraum gelangt. Nunmehr fällt wieder Schüttgut aus dem Arbeitsraum durch den Einlaufstutzen in den Raum vor der Stirnfläche des Kolbens.

Durch diese Anordnung wird somit gewährleistet, dass zum einen möglichst wenig Fremdgas, z. B. Stickstoff oder Sauerstoff, die beide nicht erwünscht sind, in den Arbeitsraum gelangen, dagegen ebenfalls kaum Gase aus dem Arbeitsraum mit dem Schüttgut nach aussen dringen, die beispielswiese toxisch oder brennbar sein können.

Eine Belüftung oder Evakuierung eines Zwischenbehältnisses, wie beispielsweise bei dem Austragen mittels zweier Ventile mit Zwischenbehälter oder auch bei Vakuumzellenradschleuden ist hier nicht notwendig.

Trotz der besonderen Ausgestaltung der erfindungsgemässen Dichtungen hat sich in der Praxis erwiesen, dass in manchen Fällen bei abrasiven Produkten die Dichtkanten bei der Bewegung des Kolbens zu schnell verschlissen, insbesondere abgeschert werden. In einer besonderen Ausführungsform der Erfindung ist deshalb der Kolben zum Ausstossen des Schüttgutes von einem Rohr umfangen, welches dem Inneren des Gehäuses eng anliegt. Insbesondere gilt dies für das Anliegen an den Dichtungen. Zum Schüttgut hin ist dieses Rohr stirnwärtig offen, wobei hier die Stirnfläche des Kolbens sichtbar wird.

Sobald Schüttgut in den Raum vor der Stirnfläche des Kolbens gelangt ist, wird in einem ersten Arbeitsschritt dieses Rohr mittels einer entsprechenden Kolben-Zylinder-Einheit so bewegt, daß es den Einlaufstutzen verschliesst und dabei gleichzeitig das Schüttgut in sich aufnimmt und kammert. Eine Dichtung nach dem Einlaufstutzen fehlt. Dagegen trifft das Rohr mit seiner Öffnungskante auf einen Dichtring, der gleichzeitig auch mit der Schliesskante des Schliesstellers des Ventils zusammenwirkt.

Nunmehr wird der Kolben über einen entsprechenden Antrieb ähnlich wie zu Figur 1 beschrieben in Bewegung gesetzt, wobei er in dem Rohr gleitet und gegenüber dem Rohr entsprechende Ringdichtungen besitzt. Diese Ringdichtungen können ähnlich ausgebildet sein, wie zu Figur 2 und 3 beschrieben.

Bei seiner Bewegung nimmt der Kolben das Schüttgut mit, wobei das Ventil eine Öffnung freigibt und das Schüttgut durch die Austragsöffnung fallen kann.

Nach dem Austragen des Schüttgutes schliesst der Schliessteller des Ventils die Öffnung vor der Stirnfläche des Kolbens und der Kolben und das Rohr werden in seine Ausgangslage zurückgezogen. Jetzt kann wieder Schüttgut vor die Stirnfläche des Kolbens aus dem Arbeitsraum durch den Einlaufstutzen gelangen.

Diese erfindungsgemässe Anordnung schont vor allem die Dichtungen innerhalb des Gehäuses der Kolbenschleuse.

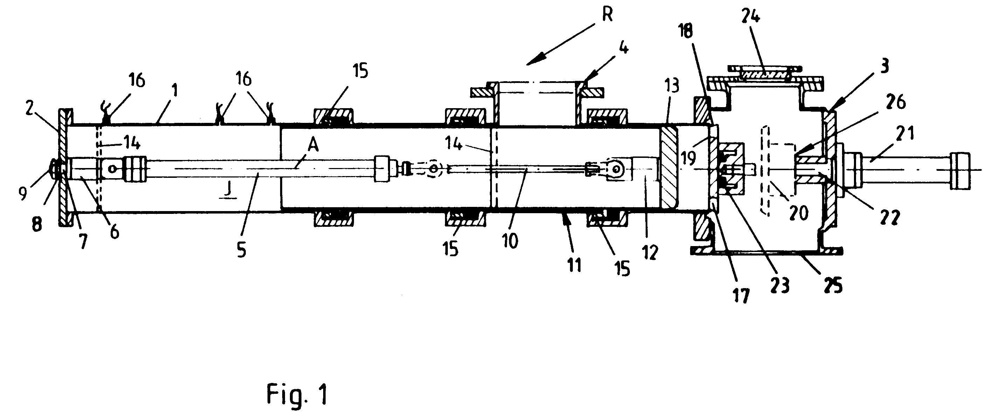

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: einen Längsschnitt durch eine erfindungsgemässe Kolbenschleuse;

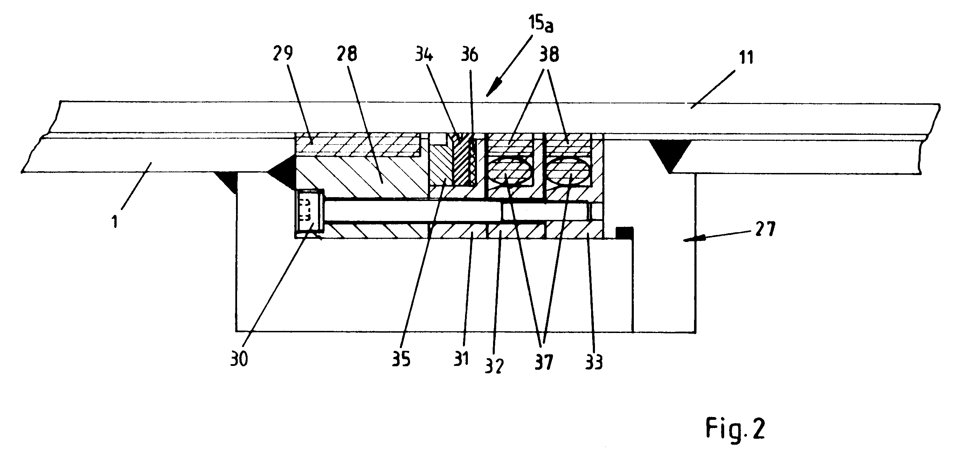

- Fig. 2: einen vergrössert dargestellten Längsschnitt durch die Kolbenschleuse gemäss Fig. 1 im Bereich einer erfindungsgemässen Dichtung;

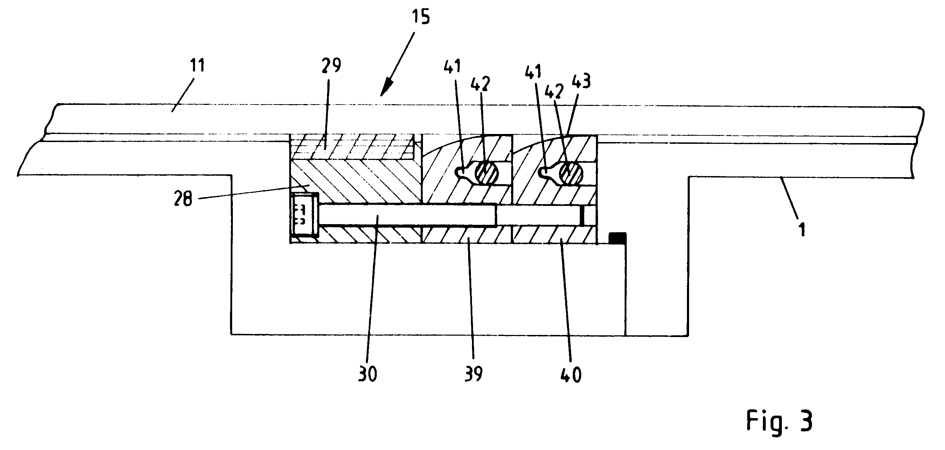

- Fig. 3: einen Längsschnitt durch ein weiteres Ausführungsbeispiel einer Dichtung entsprechend Fig. 2;

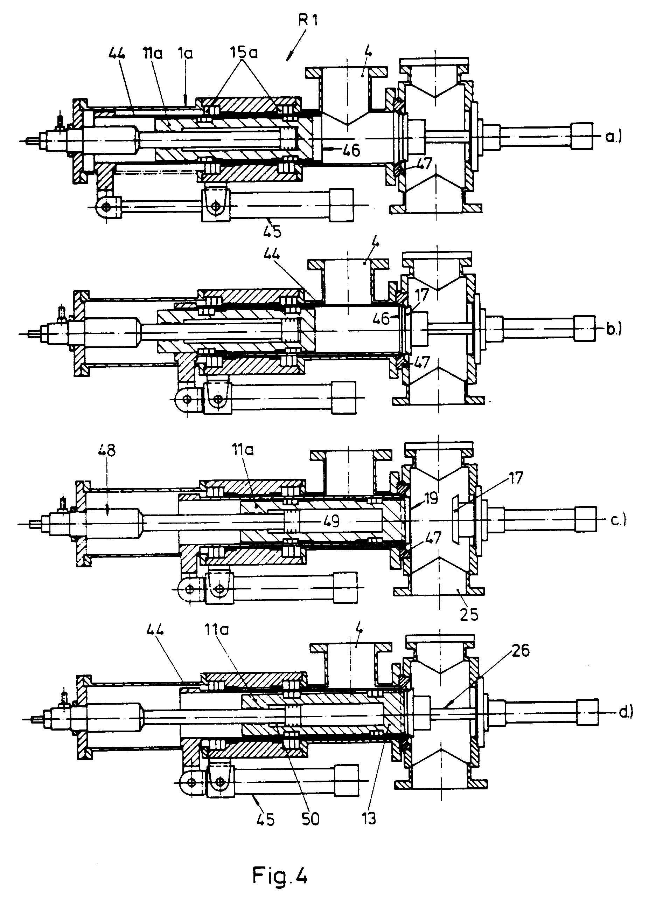

- Fig. 4: einen Längsschnitt durch eine verbesserte Ausführungsform einer Kolbenschleuse in verschiedenen Arbeitsstadien a-d.

Eine erfindungsgemässe Kolbenschleuse R weist gemäss Fig. 1 ein Gehäuse 1 auf, welches bevorzugt zylindrisch geformt ist. Einends ist dieses Gehäuse 1 von einem Bodendeckel 2 verschlossen, während andernends an das Gehäuse 1 ein Austragsgehäuse 3 anschliesst. Ferner besitzt das Gehäuse 1 einen Einlaufstutzen 4, über den das Gehäuse 1 mit einer entsprechenden Misch- bzw. Knetvorrichtung od. dgl. verbunden ist. Bevorzugt werden in dieser Misch- bzw. Knetvorrichtung schwerfliessende, haftende Schüttgüter unter Druck oder Vakuum bearbeitet, insbesondere geknetet.

Das Innere I des Gehäuses 1 ist teilweise axial von einem Zylinder 5 durchzogen, welcher einends gelenkig mit einem Anschlussstück 6 verbunden ist, das mit einem Gewindezapfen 7 den Bodendeckel 2 durchsetzt, wobei andernends dem Gewindezapfen 7 eine Mutter 8 und eine Kontermutter 9 aufgeschraubt sind.

Andernends führt aus dem Zylinder 5 eine Kolbenstange 10 und durchsetzt zumindest teilweise einen Kolben 11. Endwärtig besitzt diese Kolbenstange 10 eine ebenfalls gelenkige Verbindung mit einem weiteren Anschlussstück 12, welches von innen her an einer Stirnfläche 13 des Kolbens 11 festliegt.

In Fig. 1 ist der Kolben 11 in einer Lage dargestellt, in welcher er entsprechendes Schüttgut vor sich her schiebend zum Austragsgehäuse 3 befördert. In seiner nur gestrichelt dargestellten, zurückgezogenen Endlage 14 verläuft die Stirnfläche 13 in etwa so in der Ebene der Wand des Einlaufstutzens 4, dass der Einlaufstutzen 4 zum Inneren I des Gehäuses 1 hin freigegeben ist. In dieser gestrichelt dargestellten Endlage 14 kann Schüttgut aus dem nicht näher gezeigten Kneter bzw. einer ähnlichen Vorrichtungen durch den Einlaufstutzen 4 vor die Stirnfläche 13 des Kolbens 11 gelangen.

Der Kolben 11 ist in dem Gehäuse 1 durch drei Dichtungsanordnungen 15 geführt, welche weiter unten näher beschrieben sind. Mit 16 sind Initiatoren angedeutet, über welche die Lagen des Kolbens bestimmt werden kann. Das Austragsgehäuse 3 ist dem Gehäuse 1 abdichtend aufgeschoben, wobei die Öffnung des Gehäuses 1 innerhalb des Austragsgehäuses 3 von einem scheibenförmigen Schliessteller verschlossen wird.

Dieser Schliessteller 17 besitzt eine abgeschrägte Schliesskante 18, welche in die zylindrische Öffnung 19 des Gehäuses 1 passt. Die Bewegung des Schliesstellers 17 erfolgt entlang der Längsachse A des Gehäuses 1, d. h. in Bewegungsrichtung des Kolbens 11. Eine geöffnete Lage des Schliesstellers 17 ist gestrichelt bei 20 angedeutet. Die Bewegung des Schliesstellers 17 wird wiederum über einen pneumatisch oder hydraulisch angetriebenen Zylinder 21 bewirkt, der mit einer Kolbenstange 22 den Schliessteller 17 angreift. Zwischen Kolbenstange 22 und Schliessteller 17 ist im übrigen eine Federung 23 vorgesehen, wobei diese Federung beispielsweise durch entsprechende Tellerfedern bewirkt werden kann. Hierdurch können Bewegungsungenauigkeiten des Schliesstellers 17 bei Einnahme seines Passsitzes in der Öffnung 19 ausgeglichen werden.

Von oben her kann in das Austragsgehäuse 3 durch ein Schauglas 24 eingesehen werden. Dem Schauglas gegenüber liegt die Austragsöffnung 25, durch welche das Schüttgut zur weiteren Verarbeitung gelangt.

Die erfindungsgemässe Kolbenschleuse arbeitet folgendermassen:
Zu Beginn der Tätigkeit befindet sich der Kolben 11 in der mit 14 gekennzeichneten gestrichelten Endlage. Der Einlaufstutzen 4 ist zum Gehäuseinneren I hin offen, so dass auszutragendes Schüttgut durch den Einlaufstutzen 4 vor die Stirnfläche 13 des Kolbens 11 gelangen kann.

Nunmehr wird der Kolben 11 durch den pneumatischen oder hydraulischen Zylinder 5 über die Kolbenstange 10 entlang der Längsachse A des Gehäuses 1 zum Austragsgehäuse 3 hin bewegt, wobei die Stirnfläche 13 des Kolbens 11 das Schüttgut vor sich her schiebt. Es findet somit eine positive Produktförderung (nicht nur durch Schwerkraft) statt. Gleichzeitig wird das Schüttgut schonend behandelt, da es keine Scherung od. dgl. erfährt.

Sobald der Kolben 11 eine vorbestimmte Weglänge zurückgelegt hat, öffnet das im wesentlichen aus Schliessteller 17, Federung 23, Kolbenstange 22 und Zylinder 21 bestehende Ventil 26 im Austragsgehäuse 3, wobei der Schliessteller 17 in seine geöffnete Lage 20 verfahren wird. Das Schüttgut kann nunmehr über die Kante der Öffnung 19 in das Austragsgehäuse 3 und durch die Austragsöffnung 25 gelangen.

Der Zeitpunkt der Öffnung des Ventils 26 ist im übrigen zumindest so bestimmt, dass die Stirnfläche 13 bereits die lichte Weite des Einlaufstutzens 4 und auch die nachfolgende Dichtungsanordung 15 überfahren hat. Somit ist zu diesem Zeitpunkt der Öffnung des Ventils 26 der Einlaufstutzen 4 vollkommen abgedichtet, so dass kein Abbau des Drucks oder Vakuums, mit dem die vorgeschaltete Vorrichtung arbeitet, erfolgt.

Nachdem die Stirnfläche des Kolbens 11 die Vorderkante der Öffnung 19 erreicht hat, ist gewährleistet, dass alles Produkt aus dem Gehäuse 1 ausgetragen wurde. Nunmehr erfolgt ein geringfügiges Zurückfahren des Kolbens 11, so dass das Ventil 26 schliessen kann.

Dieser Vorgang ist so gesteuert, dass sich zwischen Stirnfläche 13 und Schliessteller 17 nur ein geringfügiger Spalt befindet. Somit wird nur ein ganz minimales Volumen an Fremdluft durch den Kolben zum Einlaufstutzen 4 hin mitgenommen. Diese Fremdluft beeinflusst das in der vorgeschalteten Vorrichtung vorhandene Vakuum bzw. den Druck minimal.

Ein wesentliches Augenmerk ist den Dichtungsanordnungen 15 zu schenken, durch die gewährleistet werden soll, dass möglichst wenig Be- oder Endlüftung über das Gehäuse 1 erfolgt. In Fig. 2 ist ein Ausführungsbeispiel dieser Dichtungsanordnung 15a dargestellt. Im Bereich der Dichtungsanordnung 15a ist das Gehäuse 1 unterbrochen. Der Unterbruch ist von einer zweiteiligen Dichtungsschale 27 überbrückt, welche mit dem Gehäuse 1 verschweisst ist. In diese Dichtungsschale 27 ist das eigentliche Lagergehäuse 28 eingesetzt. Dieses Lagergehäuse 28 hält zum Kolben 11 hin einen Lagerring 29, welcher eine erste Abdichtung bewirkt.

Über einen Schraubenbolzen 30 sind weitere Dichtgehäuse 31, 32 und 33 mit dem Lagergehäuse 28 verbunden. In das Dichtgehäuse 31 ist eine Dichtlippe 34 eingesetzt, welche sich einerseits gegen einen Distanzring 35 und andererseits gegen eine Viton-Scheibe 36 abstützt. Die beiden Dichtgehäuse 32 und 33 beinhalten eine identische Konfiguration. In beiden Fällen presst ein O-Ring 37 einen Abstreifer 38 gegen den Kolben 11.

In einem weiteren Ausführungsbeispiel der Dichtungsanordnung 15 gemäss Fig. 3 sind die Dichtgehäuse durch Teflonringe 39 und 40 ersetzt, welche einen Einschnitt 41 aufweisen. In diesen Einschnitt 41 ist jeweils ein Elastomer-Ring 42 eingelegt. Diese Anorndung hat sich in der Praxis als sehr verschleissarm bei höchst möglicher Dichtwirkung herausgestellt. Der Elastomer-Ring 42 übt eine gewisse Spreizwirkung innerhalb des Teflonringes aus, so dass eine bevorzugt etwas abgeschrägte Dichtkante 43 des Teflonringes 39 bzw. 40 immer in engem Kontakt mit dem Kolben 11 gehalten wird.

In Figur 4 ist ein weiteres Ausführungsbeispiel der Erfindung in verschiedenen Arbeitsstellungen beschrieben. Zum Unterschied nach dem Ausführungsbeispiel gemäss Figur 1 wird der Kolben 11a von einem Rohr 44 umfangen, wobei sich dieses Rohr 44 zum Gehäuse 1a der Kolbenschleuse R1 hin über entsprechende Dichtungsanordnungen 15a abstützt.

Das Rohr 44 ist verschiebbar ausgestaltet, wobei es mittels eines Kolben-Zylinder-Antriebes 45 bewegt wird. Während seiner Bewegung im vorliegenden Ausführungsbeispiel nach rechts und in Figur 4b) gezeigt, verschliesst es den Einlaufstutzen 4 und umhüllt bzw. kammert dabei das Schüttgut. In Endstellung trifft das Rohr 44 mit seinem Öffnungsrand 46 auf einen Dichtring 47 und liegt diesem Dichtring 47 abdichtend an. Dieser Dichtring 47 kann gleichzeitig auch den Sitz für den Schliessteller 17 bewirken.

Sobald das Rohr 44 seine Endstellung erreicht hat, kann, wie in Figur 4c) gezeigt ist, der Kolben 11a in dem Rohr 44 nach vorne gestossen werden, wobei er das Schüttgut mitnimmt und dieses durch die Öffnung 19 bei abgehobenem Schliessteller 17 ausstösst, so dass das Schüttgut durch die Austragsöffnung 25 fallen kann. Die Bewegung des Kolbens 11a innerhalb des Rohres 44 wird von einem Hydraulik- oder Pneumatikantrieb 48 bewirkt, wobei entsprechendes Druckmedium beim Vortreiben des Kolbens 11a in eine Vortriebskammer 49 einströmt.

Nachdem das Schüttgut ausgestossen ist, schliesst das Ventil 26 wieder, wie dies in Figur 4d) gezeigt ist. Nunmehr erfolgt ein Fluten einer Rückführungskammer 50 im Kolben 11a, so dass der Kolben 11a in seine Ausgangslage zurückkehrt. Gleichzeitig wird mittels des Antriebes 45 auch das Rohr 44 in seine Ausgangslage zurückgezogen. Schüttgut kann nunmehr aus dem Arbeitsraum durch den Einlaufstutzen 4 wieder vor die Stirnfläche 13 des Kolbens 11a gelangen.

## Patentansprüche

1. Schleuse zum Ein- und/oder Austragen von insbesondere schwerfließenden Schüttgütern in oder aus einem unter Druck oder Vakuum stehenden Raum durch eine Austragsöffnung (25) eines Austragsgehäuses (3), wobei ein Gehäuse (1) mit einem Einlaufstutzen (4) an den Raum anschließt und in dem Gehäuse (1) ein Kolben (11) geführt ist, welcher das Schüttgut von dem Einlaufstutzen (4) zu einem Austragsgehäuse (3) transportiert, und wobei eine Öffnung (19) zwischen Gehäuse (1) und Austragsgehäuse (3) durch ein öffenbares Ventil verschlossen ist,
dadurch gekennzeichent,
dass beidseits des Einlaufstutzens (4) Dichtanordnungen (15) vorgesehen sind.

2. Schleuse nach Anspruch 1, dadurch gekennzeichnet, dass die Dichtanordnung (15a) aus einem Gleitring (29) mit anschliessender Dichtlippe (34) und nachfolgenden Abstreifern (38) besteht.

3. Schleuse nach Anspruch 1, dadurch gekennzeichet, dass bei der Dichtanordnung (15) auf einen Gleitring (29) in einem Lagergehäuse (28) zumindest ein Dichtring (39, 40), insbesondere ein PTFE-Ring folgt.

4. Schleuse nach Anspruch 3, dadurch gekennzeichnet, dass der Dichtring (36, 40) einen Einschnitt (41) aufweist, in welchen ein Druckring (42) eingesetzt ist.

5. Schleuse nach Anspruch 4, dadurch gekennzeichnet, dass der Druckring ein Elastomer-Ring (42) ist.

6. Schleuse nach einem der Ansprüche 3 bis 5, dadurch gekennzeichnet, dass der Dichtring (39, 40) eine abgeschrägte Dichtkante (43) aufweist.

7. Schleuse nach einem der Ansprüche 1 bis 6, dadurch gekennzeichnet, dass der Kolben (11) in einer Endlage den Einlaufstutzen (4) freigibt, das Öffnen des Ventils (26) erst nach einem Überfahren der Dichtungsanordnung (15) nach dem Einlaufstutzen (4) erfolgt, die andere Endlage des Kolbens (11) sich in der Ebene der Öffnung (19) des Gehäuses (3) hin befindet und das Ventil (26) nach einem kurzen Rückhub des Kolbens (11) wieder schliesst.

8. Schleuse nach einem der Ansprüche 1 bis 7, dadurch gekennzeichnet, dass der Kolben (11a) von einem Rohr (44) umfangen ist, welches in dieselbe Richtung wie der Kolben (11a) vor den Einlaufstutzen (4) verschiebbar ist.

9. Schleuse nach Anspruch 8, dadurch gekennzeichnet, dass dem Rohr (44) in seiner anderen Endlage ein Dichtring (47) zugeordnet ist, auf den ein Öffnungsrand (46) des Rohres (44) auftrifft.

10. Schleuse nach Anspruch 9, dadurch gekennzeichnet, dass der Dichtring (47) gleichzeitig die Abdichtung eines Schliesstellers (17) des Ventils (26) bewirkt.

11. Schleuse nach einem der Ansprüche 8 bis 10, dadurch gekennzeichnet, dass der Kolben (11a) sich über radiale Dichtringe gegen das Rohr (44) abstützt.

## Claims

1. Sluice for charging and/or discharging, in particular, difficultly flowing bulk materials into or out of a chamber subjected to pressure or vacuum through a discharge orifice (25) of a discharge housing (3), wherein a housing (1) with an inlet nozzle (4) adjoins the chamber and a piston (11) which conveys the bulk material from the inlet nozzle (4) to a discharge housing (3) is guided in the housing (1), and wherein an orifice (19) between housing (1) and discharge housing (3) is closed by an openable valve, characterised in that sealing arrangements (15) are provided on both sides of the inlet nozzle (4).

2. Sluice according to claim 1, characterised in that the sealing arrangement (15a) consists of a sliding ring (29) with adjacent sealing lip (34) and subsequent strippers (38).

3. Sluice according to claim 1, characterised in that in the sealing arrangement (15), at least one sealing ring (39, 40), in particular a PTFE ring, follows a sliding ring (29) in a bearing housing (28).

4. Sluice according to claim 3, characterised in that the sealing ring (36, 40) has a recess (41) in which a thrust collar (42) is inserted.

5. Sluice according to claim 4, characterised in that the thrust collar is an elastomeric ring (42).

6. Sluice according to one of claims 3 to 5, characterised in that the thrust collar (39, 40) has a bevelled sealing edge (43).

7. Sluice according to one of claims 1 to 6, characterised in that the piston (11) vacates the inlet nozzle (4) in one end position, the opening of the valve (26) takes place only after the sealing arrangement (15) has been travelled over after the inlet nozzle (4), the other end position of the piston (11) is located in the plane of the orifice (19) of the housing (3) and the valve (26) closes again after a short return stroke of the piston (11).

8. Sluice according to one of claims 1 to 7, characterised in that the piston (11a) is surrounded by a tube (44) which is displaceable in the same direction as the piston (11a) before the inlet nozzle (4).

9. Sluice according to claim 8, characterised in that the tube (44) in its other end position is allocated a sealing ring (47) on which an opening rim (46) of the tube (44) impinges.

10. Sluice according to claim 9, characterised in that the sealing ring (47) simultaneously seals a closure plate (17) of the valve (26).

11. Sluice according to one of claims 8 to 10, characterised in that the piston (11a) is supported against the tube (44) by radial sealing rings .

## Revendications

1. Ecluse pour l'introduction et/ou la décharge des produits en vrac, notamment de produits s'écoulant difficilement, dans ou à partir d'une chambre sous pression ou sous vide, par une ouverture (25) d'un compartiment d'extraction (3), comprenant un boîtier (1) raccordé à la chambre précédente par une tubulure d'introduction (4) et à l'intérieur duquel se déplace un piston (11) de manière à transporter le produit en vrac, depuis la tubulure (4) jusqu'à un compartiment d'extraction (3) séparé de la tubulure par une ouverture (19) obturable par une soupape susceptible de s'ouvrir, disposée entre le boîtier (1) et le compartiment d'extraction (3), caractérisée en en ce que des dispositifs (15) assurant l'étanchéité de la tubulure d'introduction (4), sont prévus des deux côtés de cette tubulure.

2. Ecluse selon la revendication 1, caractérisée en ce que le dispositif d'étanchéité (15a) est constitué d'une bague de glissement (29) à laquelle est raccordée une lèvre d'étanchéité (34) et qui est suivie de racleurs (38).

3. Ecluse selon la revendication 1, caractérisée en ce que dans le dispositif d'étanchéité (15), une bague de glissement (29) montée dans un boîtier de palier (28), est suivie d'au moins une bague d'étanchéité (39, 40), faite en particulier de PTFE.

4. Ecluse selon la revendication 3, caractérisée en ce que la bague d'étanchéité (36, 40) porte un ajour (41) dans laquelle est logé un ressort de pression (42).

5. Ecluse selon la revendication 4, caractérisée en ce que le ressort de pression est une bague en élastomère (42).

6. Ecluse selon l'une des revendications 3 à 5, caractérisée en ce que la bague d'étanchéité (39, 40) a son bord d'étanchéité (43) oblique.

7. Ecluse selon l'une des revendications 1 à 6, caractérisée en ce que le piston (11), dans une de ses postions extrêmes, libère la tubulure d'introduction (4) et que l'ouverture de la soupape (26) ne s'effectue qu'après que le dispositif d'étanchéité (15), situé après la tubulure d'introduction (4), ait été dépassé par le piston, tandis que l'autre position extrême du piston (11) se situe dans le plan de l'ouverture du compartiment (3) et que la soupape (26) se ferme après que le piston (11) ait effectué un court recul.

8. Ecluse selon l'une des revendications 1 à 7, caractérisée en ce que le piston (11a) est entouré par un tube (44) qui peut coulisser devant la tubulure d'introduction (4), dans la même direction que le piston.

9. Piston selon la revendication 8, caractérisé en ce qu'au tube (44), dans son autre position extérieure, est associé un anneau d'étanchéité (47) sur lequel s'applique le bord (46) de l'ouverture de tube (44).

10. Ecluse selon la revendication 9, caractérisée en ce que la bague d'étanchéité (47) assure en même temps l'étanchéité d'un disque de fermeture (17) de la soupape (26).

11. Ecluse selon l'une des revendications 8 à 10, caractérisée en ce que le piston (11a) s'appuie sur le tube (44) par des bagues radiales d'étanchéité.
